# EUROPEAN PATENT SPECIFICATION

(11) **EP 2 733 915 B1**
(45) Date of publication and mention of the grant of the patent: **02.01.2019**
(21) Application number: 13193285.7
(22) Date of filing: 18.11.2013
(51) Int. Cl.: H04M 1/725, H04L 29/08, H04W 4/21, H04W 4/80

(54) **Electronic Device and Method for Displaying Service Information in Electronic Device**
Elektronische Vorrichtung und Verfahren zur Anzeige von Serviceinformationen in einer elektronischen Vorrichtung
Dispositif électronique et procédé d'affichage d'informations de service dans un dispositif électronique

(30) Priority: 16.11.2012 KR 20120130503; 30.10.2013 KR 20130130381; 15.11.2013 EP 13193182
(43) Date of publication of application: 21.05.2014
(60) Divisional application: 18208923.5
(73) Proprietor: Samsung Electronics Co., Ltd., Gyeonggi-do 443-742 (KR)
(72) Inventor: JUNG, Ji-Hyun, 443-742 Gyeonggi-do (KR); JUNG, Bu-Seop, 443-742 Gyeonggi-do (KR); BASTIN, Edwin Joseph Vimal, 443-742 Gyeonggi-do (KR); LEE, Seung-Min, 443-742 Gyeonggi-do (KR)
(74) Representative: HGF Limited

(56) References cited:
- EP-A2- 2 487 963
- US-A1- 2009 010 399
- US-A1- 2011 134 897

## Description

### BACKGROUND OF THE INVENTION

### Field of the Invention

The present disclosure relates to an apparatus and method for displaying service information in an electronic device. More particularly, the present disclosure relates to an electronic device and a method for displaying service information provided from a service provider providing an external device that is connected to the electronic device by short-range communication.

### Description of the Related Art

Due to the popularization of electronic devices and the rapid spread of wireless Local Area Networks (LANs) with potential as open wireless networks, Wi-Fi communication networks have been used to provide high-speed data services.

If an electronic device is connected to an Access Point (AP) over a Wi-Fi communication network, the electronic device may display physical Wi-Fi characteristics (e.g., signal strength, link speed, security and Internet Protocol (IP) address, etc.) provided from the connected AP, using its User Interface (UI). In other words, a provider (e.g., an operator, a venue, etc.) providing the AP may provide a Service Set Identifier (SSID) of the AP. However, the provider may not provide other service information that the provider desires to provide to the users. For example, the provider may not provide various information such as advertisements or other additional information.

Accordingly, there is a need for an improved apparatus and method for displaying service information provided from a service provider that is connected to the electronic device by short-range communication.

The above information is presented as background information only to assist with an understanding of the present disclosure. No determination has been made, and no assertion is made, as to whether any of the above might be applicable as prior art with regard to the present disclosure.

US2011/134897 A1 discloses a system and method for multimedia emergency access in a wireless network in which emergency telephone numbers may be provided to a terminal device connecting to a wireless LAN.

US2009/010399 A1 discloses an internetworking procedure with external networks in a wireless LAN and a corresponding message format that may be utilised for obtaining emergency call number information at a device wishing to connect to a wireless LAN.

### SUMMARY OF THE INVENTION

Certain examples disclosed herein aim to address at least the above-mentioned problems and/or disadvantages and to provide at least the advantages described below. Accordingly, an aim of certain disclosed examples is to provide an electronic device and a method for displaying service information provided from a service provider providing an external device that is connected to the electronic device by short-range communication. It is an aim of certain disclosed examples to solve, mitigate or obviate, at least partly, at least one of the problems and/or disadvantages associated with the prior art. Certain disclosed examples aim to provide at least one of the advantages described below.

Another aim of certain disclosed examples is to provide an electronic device and a method for providing a user with a variety of service information provided from an operator or a venue providing a Wi-Fi communication network. Embodiments of the invention are set out in the appended claims.

In accordance with an examples of the present disclosure, an electronic device is provided. The electronic device includes a communication unit (e.g. a short-range communication unit) configured to connect the electronic device to an external device provided by a service provider, and a controller configured to extract service information, provided by the service provider, from an information message (e.g. an information message used for connection to the external device), and to display the extracted service information if the electronic device is connected to the external device via the communication unit (e.g. short-range communication unit).

It will be appreciated that in certain examples the short range communication unit may be a W-Fi communication unit, but alternative examples may employ short range communication units configured to operate according to other short range communication schemes, systems, protocols, or standards. It will also be appreciated that in this specification, "short range" means relatively short range in the telecommunications context, i.e. a range typical in the above-mentioned short-range communication schemes, systems, protocols, and standards (including, but not limited to Wi-Fi), such as a range up to 1m, 10m, 100m, or 1000m.

In accordance with another examples of the present disclosure, a method for displaying service information in an electronic device is provided. The method includes connecting the electronic device to an external device, provided by a service provider, through a communication unit (e.g. a short-range communication unit), extracting service information, provided by the service provider, from an information message (e.g. an information message used for connection to the external device), and displaying the extracted service information if an option to display information about the external device is selected after the electronic device is connected to the external device.

Another example of the present disclosure provides an electronic device adapted to implement a method in accordance with the above-described example. Another example of the present disclosure provides a computer program comprising instructions arranged, when executed, to implement a method and/or apparatus in accordance with any one of the above-described examples. A further example provides machine-readable storage storing such a program.

Other examples, advantages, and salient features of certain examples will become apparent to those skilled in the art from the following detailed description, which, taken in conjunction with the annexed drawings, discloses various examples according to the present disclosure.

### BRIEF DESCRIPTION OF THE DRAWINGS

The above and other features, and advantages of certain examples disclosed herein will be more apparent from the following description taken in conjunction with the accompanying drawings, in which:
FIG. 1 illustrates a system in which an electronic device receives service information provided from an information server of an external device or an Access Point (AP) according to various examples of the present disclosure;
FIGS. 2A and 2B illustrate a Venue information format, in which service information can be added, in an information message according to various examples of the present disclosure;
FIGS. 3A and 3B illustrate an Operator information format, in which service information can be added, in an information message according to various examples of the present disclosure;
FIG. 4 illustrates an additional service information format, in which service information is stored, in a reserved field of an information message according to various examples of the present disclosure;
FIG. 5 illustrates a structure of an electronic device according to various examples of the present disclosure;
FIG. 6 is a flowchart illustrating an operation of receiving service information provided by a service provider providing an external device in an electronic device according to various examples of the present disclosure;
FIGS. 7A, 7B, and 7C are flowcharts illustrating an operation of displaying service information provided by a service provider providing an external device in an electronic device according to various examples of the present disclosure;
FIGS. 8A and 8B illustrate an operation of providing image data as service information in an electronic device according to various examples of the present disclosure;
FIGS. 9A, 9B, and 9C illustrate an operation of providing character strings as service information in an electronic device according to various examples of the present disclosure;
FIGS. 10A and 10B illustrate an operation of providing Uniform Resource Locator (URL) addresses as service information in an electronic device according to various examples of the present disclosure;
FIGS. 11A and 11B illustrate an operation of providing download addresses as service information in an electronic device according to various examples of the present disclosure; and
FIG. 12 illustrates an operation of providing phone numbers as service information in an electronic device according to various examples of the present disclosure.

Throughout the drawings, like reference numerals will be understood to refer to like parts, components, and structures.

### DETAILED DESCRIPTION OF THE EXEMPLARY EXAMPLES

The following description with reference to the accompanying drawings is provided to assist in a comprehensive understanding of various examples of the present disclosure as defined by the claims and their equivalents. It includes various specific details to assist in that understanding but these are to be regarded as merely exemplary. Accordingly, those of ordinary skill in the art will recognize that various changes and modifications of the various examples described herein can be made without departing from the scope of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various examples of the present disclosure is provided for illustration purpose only and not for the purpose of limiting the disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

An electronic device according to various examples of the present disclosure may be embodied as a device with communication capabilities. For example, the electronic device may be one or a combination of two or more of various devices such as a smart phone, a tablet Personal Computer (PC), a mobile phone, a video phone, an e-Book reader, a desktop PC, a laptop PC, a Netbook computer, a Personal Digital Assistant (PDA), a Portable Multimedia Player (PMP), an MP3 player, mobile medical equipment, an electronic bracelet, an electronic necklace, an electronic Appcessory, a camera, a wearable device, an electronic clock, a wrist watch, a home appliance (e.g., a refrigerator, an air conditioner, a cleaner, an oven, a microwave, a washer, an air purifier, and the like), an Artificial Intelligence (AI) robot, a Television (TV), a Digital Versatile Disk (DVD) player, audio equipment, various medical devices (e.g., Magnetic Resonance Angiography (MRA), Magnetic Resonance Imaging (MRI), Computed Tomography (CT), a medical camcorder, ultrasonic equipment, and the like), a navigation device, a Global Positioning System (GPS) receiver, an Event Data Recorder (EDR), a Flight Data Recorder (FDR), a set-top box, a TV box (e.g., Samsung HomeSync™, Apple TV™, Google TV™, or the like), an electronic dictionary, an automotive infotainment device, electronic equipment for a ship (e.g., a marine navigation device, a gyro compass, and the like), avionics, security equipment, electronic apparel, an electronic key, a camcorder, game consoles, a Head-Mounted Display (HMD), a flat panel display device, an electronic picture frame, furniture or a part of building/structure with communication capabilities, an electronic board, an electronic signature receiving device, a projector, and the like. It will be apparent to those of ordinary skill in the art that the electronic device according to various examples of the present disclosure is not limited to the aforementioned devices.

In certain examples of the present disclosure, short-range communication refers to a Wi-Fi communication network in the mobile communication network, and may include a Wi-Fi communication network capable of supporting Hotspot 2.0 in which network switching may be performed seamlessly. An external device, to which the electronic device is connected over the Wi-Fi communication network, may be an Access Point (AP), and may include an AP for hotspots. For convenience, a provider of a venue where an AP is installed, and an operator providing an AP-based Wi-Fi communication network will be referred to as a 'service provider'.

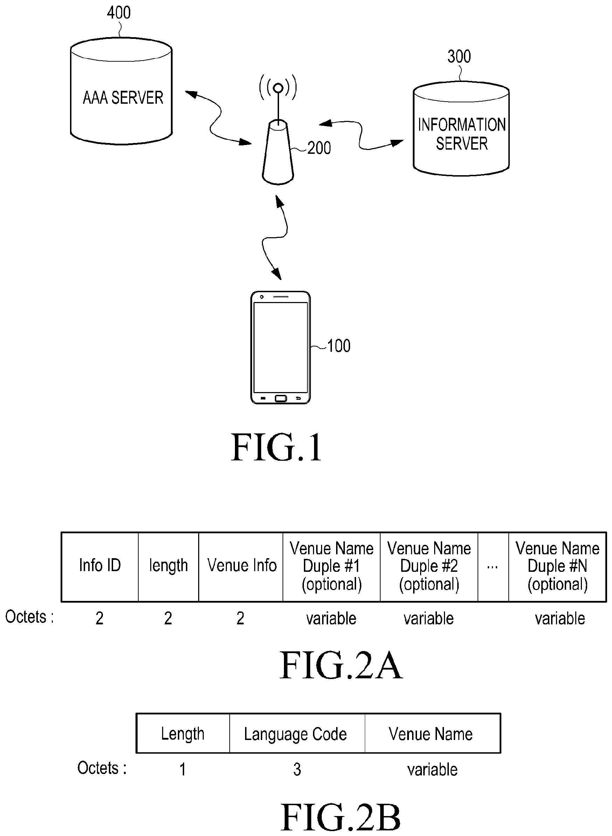

FIG. 1 illustrates a system in which an electronic device receives service information provided from an information server of an external device or an AP according to various examples of the present disclosure.

Referring to FIG. 1, if an AP 200 is discovered or found over the Wi-Fi communication network, and determined as a hotspot AP, an electronic device 100 may request an information message for the AP 200 from an information server 300 connected to the AP 200, via the AP 200.

Upon receiving an information message from the information server 300 via the AP 200, the electronic device 100 may perform an authentication process with an Authentication, Authorization and Accounting (AAA) server 400 using an authentication method specified in the information message, and automatically access (or connect with) the AP 200.

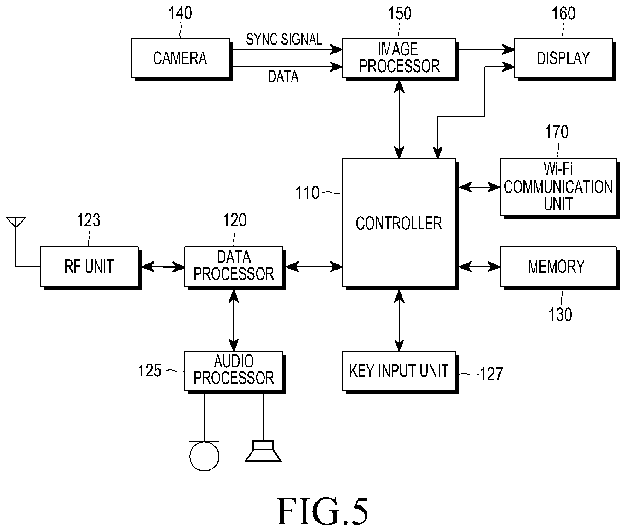

If an option to display information about the connected AP 200 is selected, the electronic device 100 connected to the AP 200 may extract service information provided by a service provider from the information message, and display the extracted service information. A structure of the electronic device 100 will be described below with reference to FIG. 5.

The information server 300 may store operator information, venue information, uplink/downlink information, external network (e.g., 3^{rd} Generation (3G) or Long Term Evolution (LTE)) information, access method information, authentication method information, and the like, of the AP 200.

Therefore, upon receiving the request for an information message from the electronic device 100 via the AP 200, the information server 300 may send an information message including the above information to the electronic device 100 via the AP 200.

In various examples of the present disclosure, the service information provided by the service provider may be added in a Venue information format and an Operator information format in the information message. In addition, the service information provided by the operator of the AP may be added in a reserved field of the information message.

FIGS. 2A and 2B illustrate a Venue information format, in which service information can be added, in an information message according to various examples of the present disclosure.

Referring to FIGS. 2A and 2B, a Venue information format and a format of a Venue Name Duple field in the Venue information format are respectively illustrated. The Venue information format is specified in the Institute of Electrical and Electronics Engineers (IEEE) 802.11 U standard, so its description will be omitted.

The venue information, which is actual data, may be stored in a Venue Name field of the Venue Name Duple field in FIG. 2B. Therefore, the service information provided by the service provider may be added in the Venue Name field, together with the venue information or actual data.

In the Venue Name field may be stored "actual data + separator + service information". If the service information is image metadata, "image://actual image data" may be stored, and if the service information is a web Uniform Resource Locator (URL) address, "http://web site url" may be stored. If the service information is a string, "string://additional string" may be stored, and if the service information is download link, "download://address of file to be downloaded" may be stored. If the service information is a phone number, "phone://phone number" may be stored.

For example, if the venue information (or venue name) is "CoffeeA, COEX Center, Samsung-Dong, Seoul", and the service information to be added is "http://www.coffeeA.com", then "CoffeeA, COEX Center, Samsung-Dong, Seoul$$$http://www.coffeeA.com" may be stored in the Venue Name field.

"$$$" is a separator indicating the storage (or presence) of service information, and various other characters may be used as the separator.

In various examples of the present disclosure, the information server 300 may be an Access Network Query Protocol (ANQP) server. Therefore, the electronic device 100 may request an information message as an ANQP query from the information server 300, and receive an information message from the information server 300 as a response to the query request.

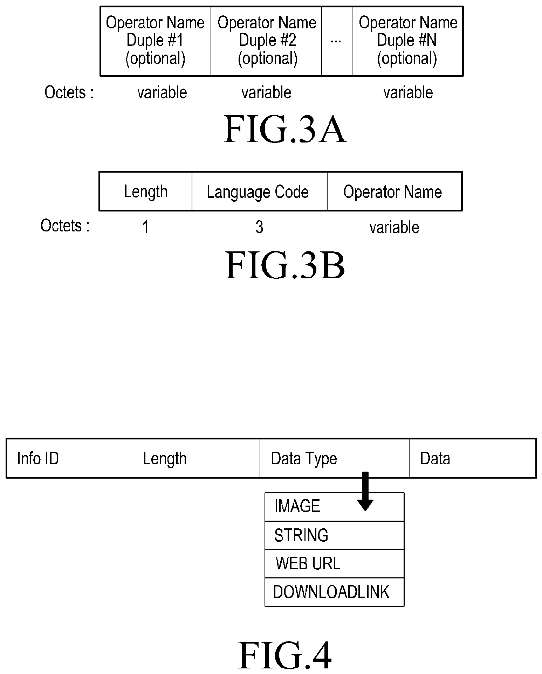

FIGS. 3A and 3B illustrate an Operator information format, in which service information can be added, in an information message according to various examples of the present disclosure.

Referring to FIGS. 3A and 3B, an Operator Name element payload format (or Operator information format) and a format of an Operator Name Duple field in the Operator Name element payload format are respectively illustrated. The Operator Name element payload format is specified in the IEEE 802.11 U standard, so its description will be omitted.

The service provider information, which is actual data, may be stored in an Operator Name field in the format of the Operator Name Duple field in FIG. 3B. Therefore, in the Operator Name field may be added the service information provided by the service provider, together with the service provider information, which is actual data.

"Actual data + separator + service information" may be stored in the Operator N ame field, like in the Venue Name field. Therefore, if the service information is i mage metadata, "image://actual image data" may be stored, and if the service inf ormation is a web URL address, "http://web site url" may be stored. If the servic e information is a string, "string://additional string" may be stored, and if the ser vice information is a download link, "download://address of file to be downloade d" may be stored. If the service information is a phone number, "phone://phone n umber" may be stored.

By adding service information to venue information, which is actual data, in the Venue Name field in FIGS. 2A and 2B, and adding service information provided by the service provider to the service provider information, which is actual data, in the Operator Name field in FIGS. 3A and 3B, the service provider may provide the advertisements and other information that the service provider desires to additionally provide to users.

FIG. 4 illustrates an additional service information format, in which service information is stored, in a reserved field of an information message according to various examples of the present disclosure.

Referring to FIG. 4, in an "Info ID" field may be stored a specific value indicating additional service information for a venue name or additional service information for an operator name, and in a "Length" field may be stored a length value of a new format. Further, in a "Data type" field may be stored the type (e.g., image, web URL, string, download link, phone number, or the like) of the service information stored in a "Data" field, and in the "Data" field may be stored the actual service information.

If "Image" is stored in the "Data type" field, "image;//actual image data" may be stored in the "Data" field, and if "Web URL" is stored in the "Data type" field, "http://web site url" may be stored in the "Data" field. If "String" is stored in the "Data type" field, "string://additional string" may be stored in the "Data" field, and if "Download link" is stored in the "Data type" field, "download://address of file to be downloaded" may be stored in the "Data" field. If "Phone number" is stored in the "Data type" field, "phone://phone number" may be stored in the "Data" field.

By providing an additional service information format, in which service information provided by the service provider is stored, to a reserved field of the information message as illustrated in FIG. 4, the service provider may provide the advertisements and other information that the service provider desires to additionally provide to users.

FIG. 5 illustrates a structure of an electronic device according to various examples of the present disclosure.

Referring to FIG. 5, a Radio Frequency (RF) unit 123 is responsible for wireless communication of the electronic device. The RF unit 123 may include an RF transmitter for up-converting a frequency of transmission signals and amplifying the up-converted transmission signals, and an RF receiver for low-noise-amplifying received signals and down-converting a frequency of the low-noise-amplified received signals. A data processor 120 may include a transmitter for coding and modulating the transmission signals, and a receiver for demodulating and decoding the received signals. Thus, the data processor 120 may include a modulator/demodulator (modem) and a coder/decoder (codec). The codec may include a data codec for processing packet data and the like, and an audio codec for processing audio signals such as voice. An audio processor 125 may play received audio signals output from the audio codec in the data processor 120, using a speaker, or transfer transmission audio signals picked up by a microphone to the audio codec in the data processor 120.

A key input unit 127 may include numeric/character keys for entering numeric/character information, and function keys for setting various functions.

A memory 130 may include a program memory and a data memory. The program memory may store programs for controlling the overall operation of the electronic device, and control programs for, if the electronic device is connected to an AP, extracting service information additionally provided by the service provider from an information message used for connection to the AP, and displaying the extracted service information, according to various examples of the present disclosure. The data memory may temporarily store the data generated during execution of the programs.

The memory 130 may store the service information that is selected by the user while the electronic device displays the service information additionally provided by the service provider after the electronic device is connected to the AP.

A controller 110 may control operations of the electronic device.

In accordance with various examples of the present disclosure, if Wi-Fi communication is selected by the user on the electronic device, the controller 110 may search for (or scan) nearby APs by means of a Wi-Fi communication unit 170. If the searched AP is a hotspot AP having an information server, the controller 110 may request an information message for the AP from an information server connected to the AP, via the AP. Upon receiving an information message for the AP from the information server, the controller 110 may perform an authentication process with an AAA server (or authentication server) using an authentication method or an access method specified in the information message, and then access the AP.

If an option to display information about the external device is selected by the user after accessing the AP, the controller 110 may determine whether there is a separator in the Venue Name field of the Venus Name information format in FIGS. 2A and 2B and/or the Operator Name field of the Operator information format in FIGS. 3A and 3B, which are included in the information message.

If there is a separator in the Venue Name field and/or the Operator Name field, the controller 110 may extract information following the separator as service information that the service provider additionally provides, and display the extracted information. Otherwise, the controller 110 may extract service information additionally provided by the service provider from the new additional service information format in FIG. 4, which is included in the reserved field of the information message, and display the extracted service information.

If a panel providing a plurality of menus (e.g. a quick panel) is selected and a Wi-Fi menu among the menus provided on the panel is selected and turned on, the controller 110 may access the AP. After accessing the AP, the controller 110 may display the service information additionally provided by the service provider, in a specific area (e.g., a lower area) of the quick panel. The quick panel may be displayed on a display 160 as the user takes a top-to-bottom drag action. The quick panel may have multiple menus used to quickly turn on/off various functions such as Wi-Fi, Bluetooth, GPS, Sound, Auto-Rotate and the like. Thus, in this specification, a quick panel may be a panel providing a plurality of menus, each adapted to enable a user to provide an input (e.g. a single input) to turn on or off a respective function of the electronic device.

If the service information extracted from the information message is image data, the controller 110 may display the image data as an icon, together with the venue information (e.g., the venue name) or the operator information (e.g., the operator name), and if the icon is selected, the controller 110 may display the image data corresponding to the icon.

If the service information extracted from the information message is a URL address, the controller 110 may display the URL address, together with the venue information or the operator information, and if the URL address is selected, the controller 110 may access the URL address.

If the service information extracted from the information message is an address of a file to be downloaded, the controller 110 may display the address of a file to be downloaded, together with the venue information or the operator information, and if the address of a file to be downloaded is selected, the controller 110 may access the address of a file to be downloaded, and automatically download the file.

If the service information extracted from the information message is a character string, the controller 110 may display the character string, together with the venue information or the operator information.

If the service information extracted from the information message is a phone number, the controller 110 may display the phone number, together with the venue information or the operator information.

A camera 140 may include a camera sensor for capturing image data and converting the captured optical image signal into electrical image signal, and a signal processor for converting an analog image signal captured by the camera sensor into digital image data. The camera sensor may be a Charge-Coupled Device (CCD) or Complementary Metal Oxide Semiconductor (CMOS) sensor, and the signal processor may be implemented with a Digital Signal Processor (DSP). The camera sensor and the signal processor may be implemented integrally or separately.

An image processor 150 may perform Image Signal Processing (ISP) to display image signals output from the camera 140 on the display 160. The ISP may include gamma correction, interpolation, spatial variation, image effects, image scaling, Automatic White Balance (AWB), Automatic Exposure (AE), Automatic Focus (AF), and the like. The image processor 150 may process the image signals output from the camera 140 on a frame by frame basis, and may output the frame image data according to the characteristics and size of the display unit 160. The image processor 150, which includes a video codec, may compress frame image data displayed on the display 160, or decompress the compressed frame image data into its original frame image data using a preset coding scheme. The video codec may include a Joint Photographic Expert Group (JPEG) codec, a Moving Picture Expert Group 4 (MPEG4) codec, a Wavelet codec, or the like. The image processor 150 is assumed to have an On Screen Display (OSD) function, and may output OSD data depending on the size of the displayed screen, under control of the controller 110.

The display 160 may display, on its screen, image signals output from the image processor 150 and user data output from the controller 110. The display 160 may use a Liquid Crystal Display (LCD) as its display panel. In this case, the display 160 may include an LCD controller, a video memory for storing image data, and an LCD display panel. If implemented as a touch screen, the LCD panel may operate as an input unit. In this case, the same keys as those on the key input unit 127 may be displayed on the display 160.

If the display unit 160 is used as a touch screen unit as it is implemented as a touch screen, the touch screen unit may be comprised of a Touch Screen Panel (TSP) including a plurality of sensor panels. The sensor panels may include a capacitive sensor panel capable of sensing a coarse touch by fingertips, and an electromagnetic induction sensor panel capable of sensing a fine touch such as a touch by a stylus pen.

In accordance with various examples of the present disclosure, if the electronic device is connected to the AP through the Wi-Fi communication unit 170, the display 160 may display on the quick panel the additional service information provided by the operator of the AP, together with the venue information or the operator information.

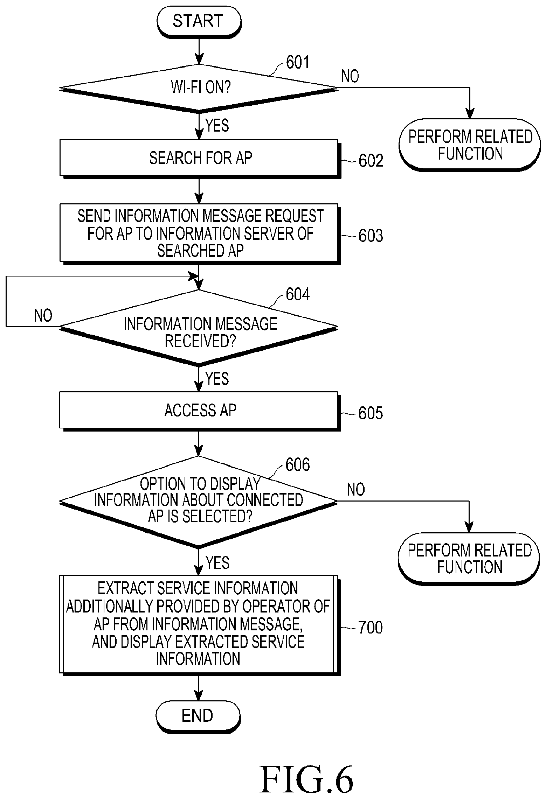

An operation of displaying service information in the electronic device will be further described with reference to FIGS. 6 to 12.

FIG. 6 is a flowchart illustrating an operation of receiving service information provided by a service provider providing an external device in an electronic device according to various examples of the present disclosure.

The operation of receiving service information will be described with reference to FIG. 6.

Referring to FIG. 6, if it is determined in operation 601 that an option to turn on Wi-Fi is selected, a controller may search for (or scan) nearby APs in operation 602.

If a specific AP is searched or found through the operation 602 of searching for nearby APs, and the AP is determined as a hotspot AP based on the information received from the searched AP, the controller may send a request for information message for the AP to an information server connected to the AP, via the AP in operation 603.

If it is determined in operation 604 that the information message is received from the information server, the controller may perform authentication with an AAA server using an access method or an authentication method specified in the information message and automatically access (or connect with) the AP, in operation 605.

After accessing the AP, if it is determined in operation 606 that an option to display information about the external device is selected (e.g., the quick panel is selected) by the user, the controller may extract service information (or additional information) provided by the service provider of the AP from the information message received in operation 604, and display the extracted service information, in operation 700.

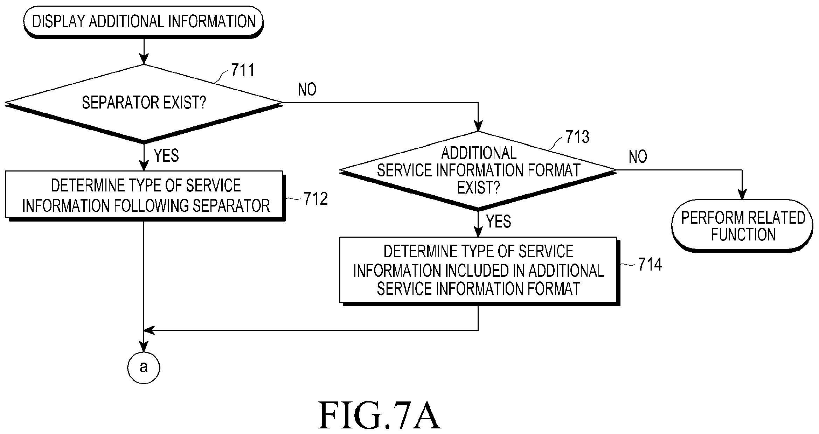

The operation 700 of extracting and displaying service information will be described with reference to FIGS. 7A to 7C.

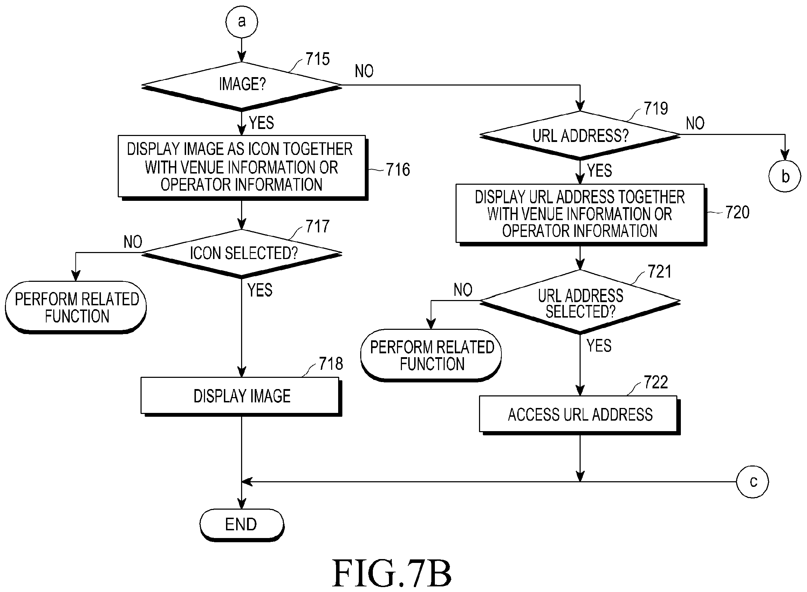

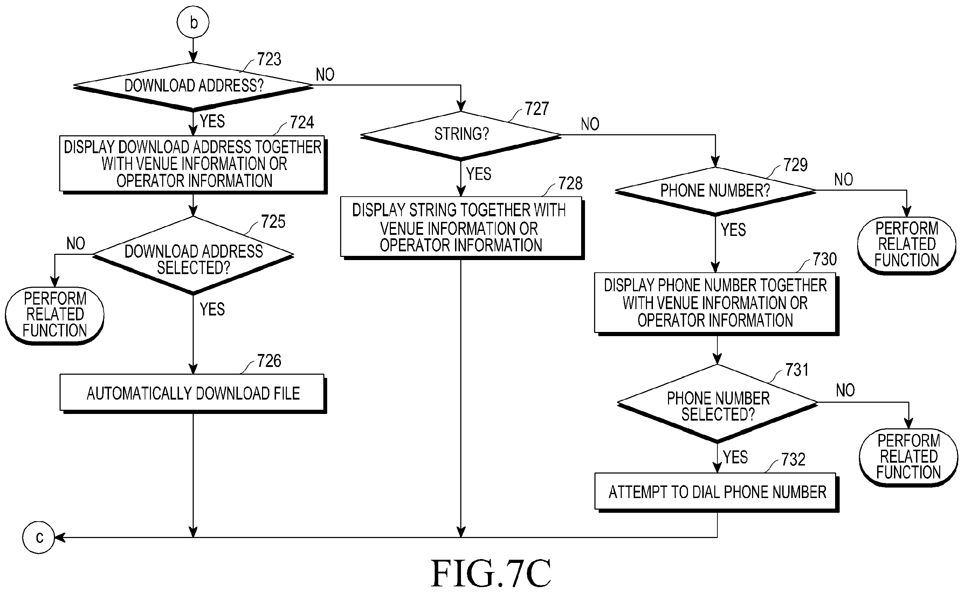

FIGS. 7A, 7B, and 7C are flowcharts illustrating an operation of displaying service information provided by a service provider providing an external device in an electronic device according to various examples of the present disclosure.

Referring to FIGS. 7A to 7C, the controller may determine in operation 711 whether there is a separator indicating that service information is stored in the Venue Name field of the Venue information format in FIGS. 2A and 2B or the Operator Name field of the Operator information format in FIGS. 3A and 3B, in the information message.

If a separator (e.g., $$$) is present in the Venue Name field or the Operator Name field, the controller may determine the type of the service information following the separator in operation 712.

In contrast, if it is determined in operation 711 that there is no separator in the Venue Name field or the Operator Name field, the controller may determine in operation 713 whether an additional service information format, in which service information is stored as shown in FIG. 4, exists in a reserved field of the information message.

If the additional service information format exists in the reserved field, the controller may determine the type of the service information stored in the "Data" field based on the information stored in the "Data type" field of the additional service information format, in operation 714.

After determining the type of the service information in operation 712 or 714, if the type of the service information is determined as image data in operation 715, the controller may display, in operation 716, the image data as a corresponding icon, together with venue information (e.g., the name of the venue where the AP is installed) or operator information (e.g., the name of the operator providing the AP-based Wi-Fi communication network), which are stored in the Venue Name field and the Operator Name field as actual data, respectively. If the icon is selected in operation 717, the controller may display the image corresponding to the icon in operation 718.

After determining the type of the service information, if the type of the service information is determined as a web URL address in operation 719, the controller may display, in operation 720, the URL address, together with venue information (e.g., the name of the venue where the AP is installed) or operator information (e.g., the name of the operator providing the AP-based Wi-Fi communication network), which are stored in the Venue Name field and the Operator Name field as actual data, respectively.

If the URL address is selected in operation 721, the controller may access the URL address in operation 722.

After determining the type of the service information, if the type of the service information is determined as an address of a file to be downloaded in operation 723, the controller may display, in operation 724, the address of a file to be downloaded, together with venue information (e.g., the name of the venue where the AP is installed) or operator information (e.g., the name of the operator providing the AP-based Wi-Fi communication network), which are stored in the Venue Name field and the Operator Name field as actual data, respectively.

If the address of a file to be downloaded is selected in operation 725, the controller may access the address of a file to be downloaded, and automatically download the file, in operation 726.

After determining the type of the service information, if the type of the service information is determined as a string in operation 727, the controller may display, in operation 728, the string, together with venue information (e.g., the name of the venue where the AP is installed) or operator information (e.g., the name of the operator providing the AP-based Wi-Fi communication network), which are stored in the Venue Name field and the Operator Name field as actual data, respectively.

After determining the type of the service information, if the type of the service information is determined as a phone number in operation 729, the controller may display, in operation 730, the phone number, together with venue information (e.g., the name of the venue where the AP is installed) or operator information (e.g., the name of the operator providing the AP-based Wi-Fi communication network), which are stored in the Venue Name field and the Operator Name field as actual data, respectively. If the phone number is selected in operation 731, the controller may attempt to dial the phone number in operation 732, and may store the phone number in a memory.

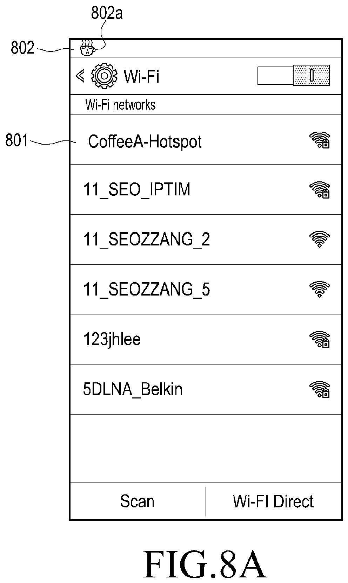

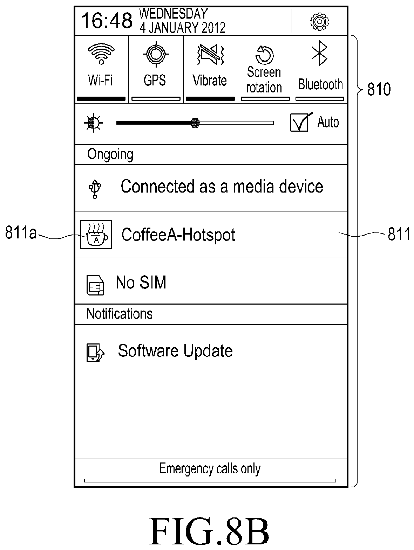

Examples of the operation of displaying service information in FIGS. 7A to 7C will be described with reference to FIGS. 8A to 12. Although it will be assumed in FIGS. 8A to 12 that one type of service information is displayed, the number of types of displayed service information is subject to change. In addition, although it will be assumed in FIGS. 8A to 12 that the service information (stored in the Venue Name field) additionally provided by the provider of the venue, at which the AP is installed, is displayed, the service information (stored in the Operator Name field) additionally provided by the operator providing the AP-based Wi-Fi communication network, may also be displayed together. FIGS. 8A and 8B illustrate an operation of providing image data as service information in an electronic device according to various examples of the present disclosure.

Referring to FIGS. 8A and 8B, upon receiving, from a hotspot AP installed in a CoffeeA venue, an information message in which information "CoffeeA, COEX Center, Samsung-Dong, Seoul$$$image://coffeeA-coupon image11.jpg" is stored in the Venue Name field, the electronic device may access the hotspot AP installed in the CoffeeA venue. If the electronic device switches to the preference mode as illustrated in FIG. 8A as the preference menu is selected, the electronic device may extract a name "CoffeeA" of the venue where the AP is installed, and a coupon image "image://coffeeA-coupon image11.jpg" which is the service information, from the Venue Name field of the Venue information format in the information message. The electronic device may display connection information "CoffeeA-Hotspot" 801 including the venue name extracted in the preference mode, to indicate that the electronic device is connected to the hotspot AP installed in the CoffeeA venue through a Wi-Fi communication unit. In the preference mode, an icon 802a corresponding to the coupon image provided as the service information "image://coffeeA-coupon image11.jpg" may be displayed in an indication bar area 802 of a display. If the icon 802a is selected, the electronic device may display or store the coupon image corresponding to the icon 802a.

After accessing the hotspot AP installed in the CoffeeA venue, if a quick panel 810 is selected and displayed, the electronic device may display in an indication area 811 an icon 811a corresponding to the coupon image provided as the service information "image://coffeeA-coupon image11.jpg", together with the connection information "CoffeeA-Hotspot" including the venue name extracted from the Venue Name field, as illustrated in FIG. 8B. If the icon 811a is selected, the electronic device may display or store the coupon image corresponding to the icon 811a.

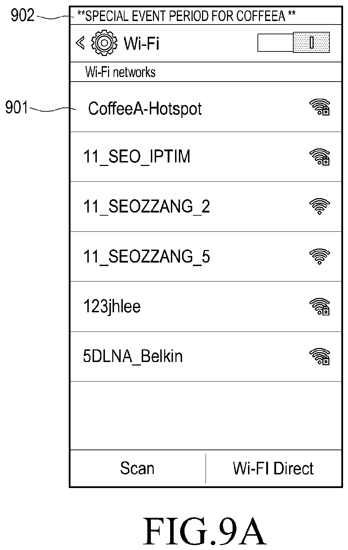

FIGS. 9A to 9C illustrate an operation of providing character strings as service information in an electronic device according to various examples of the present disclosure.

Referring to FIGS. 9A to 9C, upon receiving, from a hotspot AP installed in a CoffeeA venue, an information message in which information "CoffeeA, COEX Center, Samsung-Dong, Seoul$$$string:// ** Special Event Period for CoffeeA**" is stored in the Venue Name field, the electronic device may access the hotspot AP installed in the CoffeeA venue. If the electronic device switches to the preference mode as illustrated in FIG. 9A as the preference menu is selected, the electronic device may extract a name "CoffeeA" of the venue where the AP is installed, and a character string "**Special Event Period for CoffeeA**" which is the service information, from the Venue Name field of the Venue information format in the information message. The electronic device may display connection information "CoffeeA-Hotspot" 901 including the venue name extracted in the preference mode, to indicate that the electronic device is connected to the hotspot AP installed in the CoffeeA venue through a Wi-Fi communication unit. In the preference mode, the character string "**Special Event Period for CoffeeA**" provided as the service information may be displayed, scrolling left or right in an indication bar area 902 of a display.

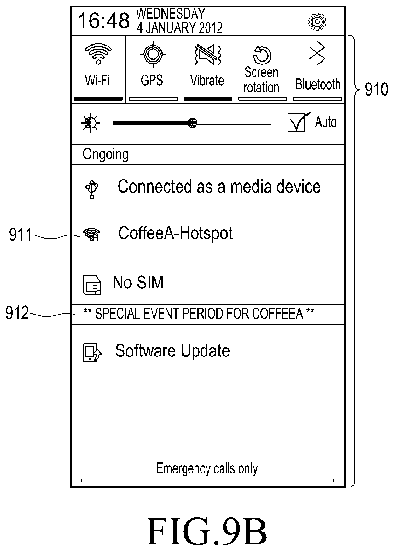

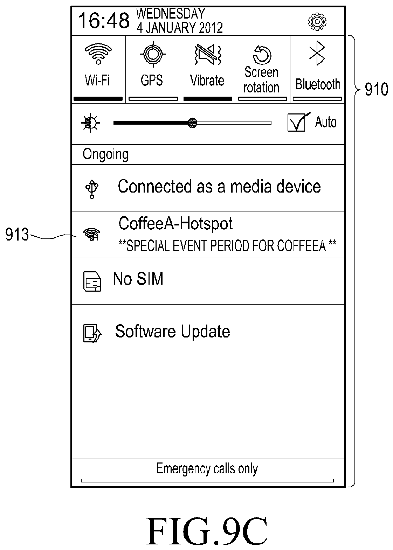

After accessing the hotspot AP installed in the CoffeeA venue, if a quick panel 910 is selected and displayed, the electronic device may display in an indication area 911 the connection information "CoffeeA-Hotspot" including the venue name extracted from the Venue Name field as illustrated in FIG. 9B. The character string "**Special Event Period for CoffeeA**" provided as the service information may be displayed, scrolling left or right on a notification bar 912 of the quick panel 910. As illustrated in FIG. 9C, the character string "**Special Event Period for CoffeeA**" provided as the service information may be displayed in an indication area 913, together with the connection information "CoffeeA-Hotspot".

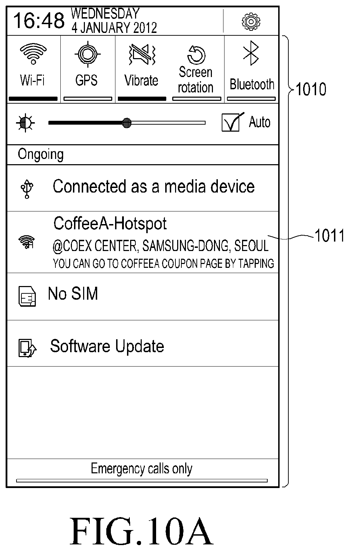

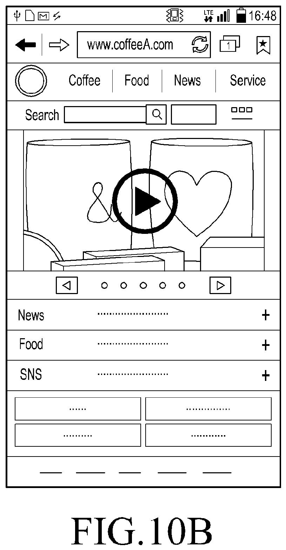

FIGS. 10A and 10B illustrate an operation of providing URL addresses as service information in an electronic device according to various examples of the present disclosure.

Referring to FIGS. 10A and 10B, upon receiving, from a hotspot AP installed in a CoffeeA venue, an information message in which information "CoffeeA, COEX Center, Samsung-Dong, Seoul$$$http://www.coffecA.com" is stored in the Venue Name field, the electronic device may access the hotspot AP installed in the CoffeeA venue. If a quick panel 1010 is selected, the electronic device may extract a name "CoffeeA" of the venue where the AP is installed, and a URL address "http://www.coffeeA.com" which is the service information, from the Venue Name field of the Venue information format in the information message. As illustrated in FIG. 10A, the URL address "http://www.coffeeA.com" which is the service information may be displayed in an indication area 1011 as a string "COEX Center, Samsung-Dong, Seoul" in the quick panel 1010, together with connection information "CoffeeA-Hotspot" including the venue name extracted from the Venue Name field. As the service information, the URL address "http://www.coffeeA.com" may be directly displayed, or may be displayed as a string "COEX Center, Samsung-Dong, Seoul" as illustrated in FIG. 10A. If the string "COEX Center, Samsung-Dong, Seoul" in the area 1011 of FIG. 10A is selected, the electronic device may directly access the URL address "http://www.coffeeA.com" as shown in FIG. 10B.

Alternatively, upon accessing the hotspot AP installed in the CoffeeA venue, the electronic device may immediately access the URL address "http://www.coffeeA.com".

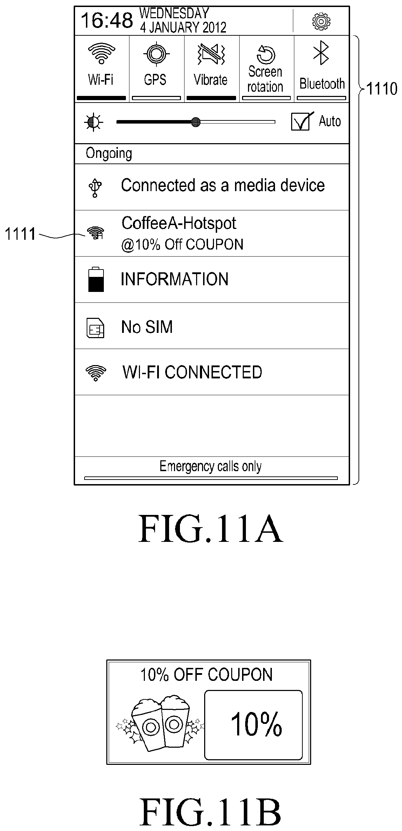

FIGS. 11A and 11B illustrate an operation of providing download addresses as service information in an electronic device according to various examples of the present disclosure.

Referring to FIGS. 11A and 11B, upon receiving, from a hotspot AP installed in a CoffeeA venue, an information message in which information "CoffeeA, COEX Center, Samsung-Dong, Seoul$$$download://www.coffeeA.com/database/coupon/image10.jpg" is stored in the Venue Name field, the electronic device may access the hotspot AP installed in the CoffeeA venue. If a quick panel 1110 is selected, the electronic device may extract a name "CoffeeA" of the venue where the AP is installed, and a download address "www.coffeeA.com/database/coupon/image10.jpg" which is the service information, from the Venue Name field of the Venue information format in the information message. As illustrated in FIG. 11A, the download address which is the service information may be displayed in an indication area 1111 as a string "10% Off Coupon" in the quick panel 1110, together with connection information "CoffeeA-Hotspot" including the venue name extracted from the Venue Name field. As the service information, the download address may be directly displayed, or may be displayed as a string "10% Off Coupon" as illustrated in FIG. 11A. If the string "10% Off Coupon" in the area 1111 of FIG. 11A is selected, the electronic device may access the download address "www.coffeeA.com/database/coupon/image10.jpg", download an image "10% Off Coupon" as illustrated in FIG. 11B, and display or store the downloaded image. If content such as video data or audio data is downloaded using the download address, the downloaded content may be directly played.

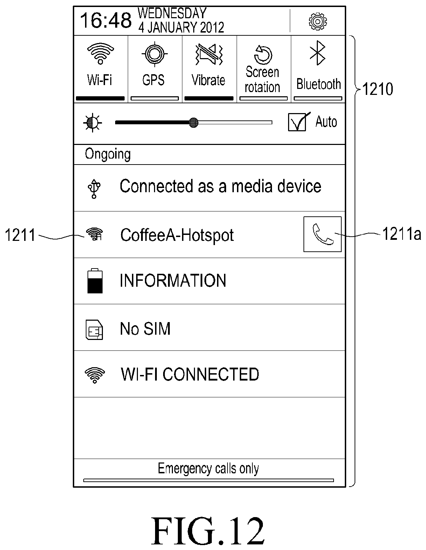

FIG. 12 illustrates an operation of providing phone numbers as service information in an electronic device according to various examples of the present disclosure.

Referring to FIG. 12, upon receiving, from a hotspot AP installed in a CoffeeA venue, an information message in which information "CoffeeA, COEX Center, Samsung-Dong, Seoul$$$phone://00-111-2222" is stored in the Venue Name field, the electronic device may access the hotspot AP installed in the CoffeeA venue. If a quick panel 1210 is selected, the electronic device may extract a name "CoffeeA" of the venue where the AP is installed, and a phone number "00-111-2222" which is the service information, from the Venue Name field of the Venue information format in the information message. As illustrated in FIG. 12, the phone number which is the service information may be displayed in an indication area 1211 as a Call icon 1211a in the quick panel 1210, together with connection information "CoffeeA-Hotspot" including the venue name extracted from the Venue Name field. If the Call icon 1211a in the area 1211 of FIG. 12 is selected, the electronic device may attempt to dial the phone number "00-111-2222" which is the service information. The phone number "00-111-2222" or the service information may be stored in a memory, together with the venue information.

In various examples of the present disclosure, the service information included in the information message may be automatically displayed, if the electronic device accesses the AP.

In addition, the controller of the electronic device may search for or scan nearby APs as an option to turn on Wi-Fi is selected, and before selecting and accessing a specific AP among the searched at least one AP, the controller may determine the presence/absence of service information in an information message for each of the at least one AP, which is received via each of the at least one AP, and display the presence/absence of the service information for each of the at least one AP. For example, the controller may determine the presence/absence of the service information depending on whether a separator is present in the Venue Name field or the Operator Name field of the information message that is received before the electronic device accesses the AP. If a specific icon indicating the presence of service information is selected while the electronic device displays the icon indicating the presence of the service information for the AP with service information among the at least one AP, the controller may display details about the service information (e.g., information following the separator in the Venue Name field or the Operator Name field).

The proposed apparatus and method for displaying service information may be implemented as computer-readable code in a computer-readable recording medium. The computer-readable recording medium may include any kind of recording device storing computer-readable data. Examples of the recording medium may include Read Only Memory (ROM), Random Access Memory (RAM), optical disk, magnetic tape, floppy disk, hard disk, non-volatile memory, and the like, and may also include the medium that is implemented in the form of carrier waves (e.g., transmission over the Internet). In addition, the computer-readable recording medium may be distributed over the computer systems connected over the network, and computer-readable codes may be stored and executed in a distributed manner.

As is apparent from the foregoing description, upon accessing the Wi-Fi communication network, the electronic device may receive a variety of service information from an operator or a venue providing the Wi-Fi communication network, making it possible for the operator to provide a variety of service information to the users, contributing to the improvement of the advertising efficiency.

Throughout the description and claims of this specification, the words "comprise" and "contain" and variations of the words, for example "comprising" and "comprises", means "including but not limited to", and is not intended to (and does not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith.

It will be also be appreciated that, throughout the description and claims of this specification, language in the general form of "X for Y" (where Y is some action, activity or step and X is some means for carrying out that action, activity or step) encompasses means X adapted or arranged specifically, but not exclusively, to do Y.While the present disclosure has been shown and described with reference to various embodiments thereof, it will be understood by those skilled in the art that various changes in form and details may be made therein without departing from the scope of the present disclosure as defined by the appended claims and their equivalents.

## Claims

1. An electronic device (100) comprising:
a short-range communication unit (170) configured to connect the electronic device (100) to an external device (200); and
a controller (110) configured to:
search for an external device (200) if an option to establish short-range communication is selected;
send an information message request for requesting information about the external device (200) to an information server (300) of the searched external device (200);
upon receipt of an information message from the information server (300), connect the electronic device (100) to the external device (200) using the received information message via the short-range communication unit (170); and
display service information, if the service information provided by a service provider is included in the information message after the electronic device (100) is connected to the external device (200) via the short-range communication unit (170).

2. The electronic device (100) of claim 1, wherein the controller (110) is further configured to extract the service information from the information message and to display the extracted service information, if an option to display information about the external device (200) is selected after the electronic device (100) is connected to the external device (200) via the short-range communication unit (170).

3. The electronic device (100) of claim 1 or claim 2, wherein the controller (110) is further configured to extract the service information from the information message and to display the extracted service information, if a quick panel is selected after the electronic device (100) is connected to the external device (200) via the short-range communication unit (170).

4. The electronic device of any preceding claim, wherein the controller is further configured to,
determine at least one of a Venue information format storing information about a venue where the external device is installed, and an Operator information format storing information about an operator providing the external device, in the information message; and
if a separator indicating the presence of service information is detected in at least one of the Venue information format and the Operator information format, extract information following the separator as service information and display the service information.

5. The electronic device (100) of claim 1, wherein the controller (110) is further configured to determine the presence of the separator in at least one of a Venue Name field of the Venue information format and an Operator Name field of the Operator information format.

6. The electronic device (100) of any preceding claim, wherein the controller (110) is further configured to determine whether an additional service information format storing service information is present in a reserved field of the information message, and, if the additional service information format is detected in the reserved field, to extract the service information from the additional service information format and display the service information.

7. The electronic device (100) of any preceding claim, wherein, if the service information extracted from the information message comprises image data, the controller (110) is further configured to display the image data as an icon, and to display the image data corresponding to the icon if the icon is selected.

8. The electronic device (100) of any preceding claim, wherein, if the service information extracted from the information message comprises a Uniform Resource Locator (URL) address, the controller (110) is further configured to display the URL address, and to access the URL address if the URL address is selected.

9. The electronic device (100) of any preceding claim, wherein, if the service information extracted from the information message comprises an address of a file to be downloaded, the controller (110) is further configured to display the address of a file to be downloaded, and, if the address of a file to be downloaded is selected, to access the address of a file to be downloaded and download the file.

10. The electronic device (100) of any preceding claim, wherein, if the service information extracted from the information message comprises a character string, the controller (110) is further configured to display the character string.

11. The electronic device (100) of any preceding claim, wherein, if the service information extracted from the information message comprises a phone number, the controller (110) is further configured to display the phone number, and to attempt to dial the phone number if the phone number is selected.

12. The electronic device (100) of any preceding claim, wherein the short-range communication unit comprises a Wi-Fi communication unit (170), and the external device (200) comprises an Access Point (AP) (200).

13. A method for displaying service information in an electronic device (100), the method comprising:
searching for an external device (200) if an option to establish short-range communication is selected;
sending an information message request for requesting information about the external device (200) to an information server (300) of the searched external device (200);
upon receipt of an information message from the information server (300), connecting the electronic device (100) to the external device (200) using the received information message via a short-range communication unit (170); and
displaying service information, if the service information provided by a service provider is included in the information message after the electronic device (100) is connected to the external device (200) via the short-range communication unit (170).

14. The method of claim 13, wherein the displaying comprises determining that the option to display information about the external device (200) is selected, if a quick panel is selected after the electronic device (100) is connected to the external device (200).

15. The method of claims 13 or claim 14, wherein the displaying comprises:
determining at least one of a Venue information format storing information about a venue where the external device is installed, and an Operator information format storing information about an operator providing the external device, in the information message; and
if a separator indicating the presence of service information is detected in at least one of the Venue information format and the Operator information format, extracting information following the separator as service information and displaying the service information.

16. The method of claim 15, wherein the determining comprises determining the presence of the separator in at least one of a Venue Name field of the Venue information format and an Operator Name field of the Operator information format.

17. The method of any one of claims 13 to 16, wherein the displaying comprises:
determining whether an additional service information format storing service information is present in a reserved field of the information message; and
if the additional service information format is detected in the reserved field, extracting the service information from the additional service information format and displaying the service information.

18. The method of any one of claims 13 to 17, wherein the displaying comprises:
if the service information extracted from the information message comprises image data, displaying the image data as an icon; and
displaying the image data corresponding to the icon if the icon is selected.

19. The method of any one of claims 13 to 18, wherein the displaying comprises:
if the service information extracted from the information message comprises a Uniform Resource Locator (URL) address, displaying the URL address; and
accessing the URL address if the URL address is selected.

20. The method of any one of claims 13 to 19, wherein the displaying comprises:
if the service information extracted from the information message comprises an address of a file to be downloaded, displaying the address of a file to be downloaded; and
if the address of a file to be downloaded is selected, accessing the address of a file to be downloaded and downloading the file.

21. The method of any one of claims 13 to 20, wherein the displaying comprises:
if the service information extracted from the information message comprises a character string, displaying the character string.

22. The method of any one of claims 13 to 19, wherein the displaying comprises:
if the service information extracted from the information message comprises a phone number, displaying the phone number; and
attempting to dial the phone number if the phone number is selected.

23. The method of any one of claims 13 to 22, wherein the short-range communication unit (170) comprises a Wi-Fi communication unit (170), and the external device (200) comprises an Access Point (AP) (200).

## Patentansprüche

1. Elektronische Vorrichtung (100), aufweisend:
eine Nahbereichskommunikationseinheit (170), die konfiguriert ist, um die elektronische Vorrichtung (100) mit einer externen Vorrichtung (200) zu verbinden; und
einen Controller (110), der konfiguriert ist zum:
Suchen nach einer externen Vorrichtung (200), wenn eine Option zum Herstellen einer Nahbereichskommunikation gewählt wird;
Senden einer Informationsnachrichtanforderung zum Anfordern von Informationen über die externe Vorrichtung (200) an einen Informationsserver (300) der gesuchten externen Vorrichtung (200);
nach Empfangen einer Informationsnachricht von dem Informationsserver (300) Verbinden der elektronischen Vorrichtung (100) mit der externen Vorrichtung (200) unter Verwendung der über die Nahbereichskommunikationseinheit (170) empfangenen Informationsnachricht; und
Anzeigen von Serviceinformationen, wenn die Serviceinformationen, die durch einen Serviceanbieter bereitgestellt werden, in der Informationsnachricht enthalten sind, nachdem die elektronische Vorrichtung (100) mit der externen Vorrichtung (200) über die Nahbereichskommunikationseinheit (170) verbunden wurde.

2. Elektronische Vorrichtung (100) nach Anspruch 1, wobei der Controller (110) ferner konfiguriert ist, um die Serviceinformationen aus der Informationsnachricht zu extrahieren und die extrahierten Serviceinformationen anzuzeigen, wenn eine Option zum Anzeigen von Informationen über die externe Vorrichtung (200) ausgewählt wird, nachdem die die elektronische Vorrichtung (100) mit der externen Vorrichtung (200) über die Nahbereichskommunikationseinheit (170) verbunden wurde.

3. Elektronische Vorrichtung (100) nach Anspruch 1 oder Anspruch 2, wobei der Controller (110) ferner konfiguriert ist, um die Serviceinformationen aus der Informationsnachricht zu extrahieren und die extrahierten Serviceinformationen anzuzeigen, wenn ein Schnellzugriff-Fenster ausgewählt wird, nachdem die die elektronische Vorrichtung (100) mit der externen Vorrichtung (200) über die Nahbereichskommunikationseinheit (170) verbunden wurde.

4. Elektronische Vorrichtung nach einem der vorhergehenden Ansprüche, wobei der Controller ferner konfiguriert ist, um
in der Informationsnachricht mindestens entweder ein Ort-Informationsformat, das Informationen über einen Ort speichert, an dem die externe Vorrichtung installiert ist, oder ein Betreiber-Informationsformat zu bestimmen, das Informationen über einen Betreiber speichert, der die externe Vorrichtung bereitstellt; und
wenn ein Trennzeichen, das das Vorhandensein von Serviceinformationen angibt, entweder in dem Ort-Informationsformat oder dem Betreiber-Informationsformat erkannt wird, Informationen nach dem Trennzeichen als Serviceinformationen zu extrahieren und die Serviceinformationen anzuzeigen.

5. Elektronische Vorrichtung (100) nach Anspruch 1, wobei der Controller (110) ferner konfiguriert ist, um das Vorhandensein des Trennzeichens in mindestens entweder einem Feld für den Ortsnamen des Ort-Informationsformats oder einem Feld für den Betreibernamen des Betreiber-Informationsformats zu bestimmen.

6. Elektronische Vorrichtung (100) nach einem der vorhergehenden Ansprüche, wobei der Controller (110) ferner konfiguriert ist, um zu bestimmen, ob ein zusätzliches Serviceinformationsformat, das Serviceinformationen speichert, in einem reservierten Feld der Informationsnachricht vorhanden ist, und wenn das zusätzliche Serviceinformationsformat in dem reservierten Feld erfasst wird, die Serviceinformationen aus dem zusätzlichen Serviceinformationsformat zu extrahieren und die Serviceinformationen anzuzeigen.

7. Elektronische Vorrichtung (100) nach einem der vorhergehenden Ansprüche, wobei, wenn die aus der Informationsnachricht extrahierten Serviceinformationen Bilddaten aufweisen, der Controller (110) ferner konfiguriert ist, um die Bilddaten als ein Symbol anzuzeigen und die dem Symbol entsprechenden Bilddaten anzuzeigen, wenn das Symbol gewählt wird.

8. Elektronische Vorrichtung (100) nach einem der vorhergehenden Ansprüche, wobei, wenn die aus der Informationsnachricht extrahierten Serviceinformationen eine Uniform Resource Locator- (URL) Adresse aufweisen, der Controller (110) ferner konfiguriert ist, um die URL-Adresse anzuzeigen und auf die URL-Adresse zuzugreifen, wenn die URL-Adresse gewählt wird.

9. Elektronische Vorrichtung (100) nach einem der vorhergehenden Ansprüche, wobei, wenn die aus der Informationsnachricht extrahierten Serviceinformationen eine Adresse einer Datei aufweisen, die heruntergeladen werden soll, der Controller (110) ferner konfiguriert ist, um die Adresse einer Datei, die heruntergeladen werden soll, anzuzeigen, und wenn die Adresse einer Datei, die heruntergeladen werden soll, gewählt wird, auf die Adresse einer Datei, die heruntergeladen werden soll, zuzugreifen und die Datei herunterzuladen.

10. Elektronische Vorrichtung (100) nach einem der vorhergehenden Ansprüche, wobei, wenn die aus der Informationsnachricht extrahierten Serviceinformationen eine Zeichenfolge aufweisen, der Controller (110) ferner konfiguriert ist, um die Zeichenfolge anzuzeigen.

11. Elektronische Vorrichtung (100) nach einem der vorhergehenden Ansprüche, wobei, wenn die aus der Informationsnachricht extrahierten Serviceinformationen eine Telefonnummer aufweisen, der Controller (110) ferner konfiguriert ist, um die Telefonnummer anzuzeigen und zu versuchen, die Telefonnummer zu wählen, wenn die Telefonnummer ausgewählt wird.

12. Elektronische Vorrichtung (100) nach einem der vorhergehenden Ansprüche, wobei die Nahbereichskommunikationseinheit eine Wi-Fi-Kommunikationseinheit (170) aufweist, und die externe Vorrichtung (200) einen Zugriffspunkt (AP) (200) aufweist.

13. Verfahren zum Anzeigen von Serviceinformationen in einer elektronischen Vorrichtung (100), wobei das Verfahren aufweist:
ein Suchen nach einer externen Vorrichtung (200), wenn eine Option zum Herstellen einer Nahbereichskommunikation gewählt wird;
ein Senden einer Informationsnachrichtanforderung zum Anfordern von Informationen über die externe Vorrichtung (200) an einen Informationsserver (300) der gesuchten externen Vorrichtung (200);
nach Empfangen einer Informationsnachricht von dem Informationsserver (300) ein Verbinden der elektronischen Vorrichtung (100) mit der externen Vorrichtung (200) unter Verwendung der über eine Nahbereichskommunikationseinheit (170) empfangenen Informationsnachricht; und
ein Anzeigen von Serviceinformationen, wenn die Serviceinformationen, die durch einen Serviceanbieter bereitgestellt werden, in der Informationsnachricht enthalten sind, nachdem die elektronische Vorrichtung (100) mit der externen Vorrichtung (200) über die Nahbereichskommunikationseinheit (170) verbunden wurde.

14. Verfahren nach Anspruch 13, wobei das Anzeigen ein Bestimmen aufweist, ob die Option zum Anzeigen von Informationen über die externe Vorrichtung (200) gewählt ist, wenn ein Schnellzugriff-Fenster ausgewählt wird, nachdem die die elektronische Vorrichtung (100) mit der externen Vorrichtung (200) verbunden wurde.

15. Verfahren nach Anspruch 13 oder Anspruch 14, wobei das Anzeigen aufweist:
in der Informationsnachricht ein Bestimmen von mindestens entweder einem Ort-Informationsformat, das Informationen über einen Ort speichert, an dem die externe Vorrichtung installiert ist, oder einem Betreiber-Informationsformat, das Informationen über einen Betreiber speichert, der die externe Vorrichtung bereitstellt; und
wenn ein Trennzeichen, das das Vorhandensein von Serviceinformationen angibt, entweder in mindestens dem Ort-Informationsformat oder dem Betreiber-Informationsformat erkannt wird, ein Extrahieren von Informationen nach dem Trennzeichen als Serviceinformationen und ein Anzeigen der Serviceinformationen.

16. Verfahren nach Anspruch 15, wobei das Bestimmen ein Bestimmen des Vorhandenseins des Trennzeichens in mindestens entweder einem Feld für den Ortsnamen des Ort-Informationsformats oder einem Feld für den Betreibernamen des Betreiber-Informationsformats aufweist.

17. Verfahren nach einem der Ansprüche 13 bis 16, wobei das Anzeigen aufweist:
ein Bestimmen, ob ein zusätzliches Serviceinformationsformat, das Serviceinformationen speichert, in einem reservierten Feld der Informationsnachricht vorhanden ist, und
wenn das zusätzliche Serviceinformationsformat in dem reservierten Feld erfasst wird, ein Extrahieren der Serviceinformationen aus dem zusätzlichen Serviceinformationsformat und ein Anzeigen der Serviceinformationen.

18. Verfahren nach einem der Ansprüche 13 bis 17, wobei das Anzeigen aufweist:
wenn die aus der Informationsnachricht extrahierten Serviceinformationen Bilddaten aufweisen, ein Anzeigen der Bilddaten als Symbol; und
ein Anzeigen der dem Symbol entsprechenden Bilddaten, wenn das Symbol gewählt wird.

19. Verfahren nach einem der Ansprüche 13 bis 18, wobei das Anzeigen aufweist:
wenn die aus der Informationsnachricht extrahierten Serviceinformationen eine Uniform Resource Locator- (URL) Adresse aufweisen, ein Anzeigen der URL-Adresse; und
ein Zugreifen auf die URL-Adresse, wenn die URL-Adresse gewählt wird.

20. Verfahren nach einem der Ansprüche 13 bis 19, wobei das Anzeigen aufweist:
wenn die aus der Informationsnachricht extrahierten Serviceinformationen eine Adresse einer Datei aufweisen, die heruntergeladen werden soll, ein Anzeigen der Adresse einer Datei, die heruntergeladen werden soll; und
wenn die Adresse einer Datei, die heruntergeladen werden soll, gewählt wird, ein Zugreifen auf die Adresse einer Datei, die heruntergeladen werden soll, und ein Herunterladen der Datei.

21. Verfahren nach einem der Ansprüche 13 bis 20, wobei das Anzeigen aufweist:
wenn die aus der Informationsnachricht extrahierten Serviceinformationen eine Zeichenfolge aufweisen, ein Anzeigen der Zeichenfolge.

22. Verfahren nach einem der Ansprüche 13 bis 19, wobei das Anzeigen aufweist:
wenn die aus der Informationsnachricht extrahierten Serviceinformationen eine Telefonnummer aufweisen, ein Anzeigen der Telefonnummer; und
einen Versuch, die Telefonnummer zu wählen, wenn die Telefonnummer ausgewählt wird.

23. Verfahren nach einem der Ansprüche 13 bis 22, wobei die Nahbereichskommunikationseinheit (170) eine Wi-Fi-Kommunikationseinheit (170) aufweist, und die externe Vorrichtung (200) einen Zugriffspunkt (AP) (200) aufweist.

## Revendications

1. Dispositif électronique (100) comprenant :
une unité de communication à courte portée (170) conçue pour connecter le dispositif électronique (100) à un dispositif externe (200) ; et
une unité de commande (110) conçue pour :
rechercher un dispositif externe (200) si une option pour établir une communication à courte portée est sélectionnée ;
envoyer une demande de message d'informations pour demander des informations concernant le dispositif externe (200) à un serveur d'informations (300) du dispositif externe recherché (200) ;
à la réception d'un message d'informations provenant du serveur d'informations (300), connecter le dispositif électronique (100) au dispositif externe (200) à l'aide du message d'informations reçu par l'intermédiaire de l'unité de communication à courte portée (170) ; et
afficher des informations de service, si les informations de service fournies par un fournisseur de services sont incluses dans le message d'informations après la connexion du dispositif électronique (100) au dispositif externe (200) par l'intermédiaire de l'unité de communication à courte portée (170).

2. Dispositif électronique (100) selon la revendication 1, ledit dispositif de commande (110) étant en outre conçu pour extraire des informations de service du message d'informations et pour afficher les informations de service extraites, si une option pour afficher des informations concernant le dispositif externe (200) est sélectionnée après la connexion du dispositif électronique (100) au dispositif externe (200) par l'intermédiaire de l'unité de communication à courte portée (170).

3. Dispositif électronique (100) selon la revendication 1 ou 2, ledit dispositif de commande (110) étant en outre conçu pour extraire des informations de service du message d'informations et pour afficher les informations de service extraites, si un panneau rapide est sélectionné après la connexion du dispositif électronique (100) au dispositif externe (200) par l'intermédiaire de l'unité de communication à courte portée (170).

4. Dispositif électronique selon l'une quelconque des revendications précédentes, ledit dispositif de commande étant en outre conçu pour,
déterminer au moins l'une d'une information de stockage de format d'informations de lieu concernant le lieu où le dispositif externe est installé et d'une information de stockage de format d'informations d'opérateur concernant l'opérateur fournissant le dispositif externe, dans le message d'informations ; et
si un séparateur indiquant la présence d'informations de service est détecté dans au moins l'un du format d'informations de lieu et du format d'informations d'opérateur, extraire des informations après le séparateur en tant qu'informations de service et afficher les informations de service.

5. Dispositif électronique (100) selon la revendication 1, ledit dispositif de commande (110) étant en outre conçu pour déterminer la présence du séparateur dans au moins l'un d'un champ Nom de lieu du format d'informations de lieu et d'un champ Nom d'opérateur du format d'informations d'opérateur.

6. Dispositif électronique (100) selon l'une quelconque des revendications précédentes, ledit dispositif de commande (110) étant en outre configuré pour déterminer si une information de service de stockage de format d'informations de service supplémentaire est présente dans un champ réservé du message d'informations, et, si le format d'informations de service supplémentaire est détecté dans le champ réservé, pour extraire les informations de service du format d'informations de service supplémentaire et afficher les informations de service.

7. Dispositif électronique (100) selon l'une quelconque des revendications précédentes, dans lequel, si les informations de service extraites du message d'informations comprennent des données d'image, le dispositif de commande (110) est en outre conçu pour afficher les données d'image sous la forme d'une icône et pour afficher les données d'image correspondant à l'icône si l'icône est sélectionnée.

8. Dispositif électronique (100) selon l'une quelconque des revendications précédentes, dans lequel, si les informations de service extraites du message d'informations comprennent une adresse de localisateur de ressources universel (URL), le dispositif de commande (110) est en outre conçu pour afficher l'adresse URL et pour accéder à l'adresse URL si l'adresse URL est sélectionnée.

9. Dispositif électronique (100) selon l'une quelconque des revendications précédentes, dans lequel, si les informations de service extraites du message d'informations comprennent une adresse d'un fichier à télécharger, le dispositif de commande (110) est en outre conçu pour afficher l'adresse d'un fichier à télécharger, et, si l'adresse d'un fichier à télécharger est sélectionnée, pour accéder à l'adresse d'un fichier à télécharger et télécharger le fichier.

10. Dispositif électronique (100) selon l'une quelconque des revendications précédentes, dans lequel, si les informations de service extraites du message d'informations comprennent une chaîne de caractères, le dispositif de commande (110) est en outre conçu pour afficher la chaîne de caractères.

11. Dispositif électronique (100) selon l'une quelconque des revendications précédentes, dans lequel, si les informations de service extraites du message d'informations comprennent un numéro de téléphone, le dispositif de commande (110) est en outre conçu pour afficher le numéro de téléphone et pour tenter de composer le numéro de téléphone si le numéro de téléphone est sélectionné.

12. Dispositif électronique (100) selon l'une quelconque des revendications précédentes, ladite unité de communication à courte portée comprenant une unité de communication Wi-Fi (170), et ledit dispositif externe (200) comprenant un point d'accès (AP) (200).

13. Procédé d'affichage d'informations de service dans un dispositif électronique (100), le procédé comprenant :
la recherche d'un dispositif externe (200) si une option pour établir une communication à courte portée est sélectionnée ;
l'envoi d'une demande de message d'informations pour demander des informations concernant le dispositif externe (200) à un serveur d'informations (300) du dispositif externe recherché (200) ;
à la réception d'un message d'informations provenant du serveur d'informations (300), la connexion du dispositif électronique (100) au dispositif externe (200) à l'aide du message d'informations reçu par l'intermédiaire d'une unité de communication à courte portée (170) ; et
l'affichage d'informations de service, si les informations de service fournies par un fournisseur de services sont incluses dans le message d'informations après la connexion du dispositif électronique (100) au dispositif externe (200) par l'intermédiaire de l'unité de communication à courte portée (170).

14. Procédé selon la revendication 13, ledit affichage comprenant la détermination que l'option d'affichage d'informations concernant le dispositif externe (200) est sélectionnée, si un panneau rapide est sélectionné après la connexion du dispositif électronique (100) au dispositif externe (200).

15. Procédé selon la revendication 13 ou 14, ledit affichage comprenant :
la détermination d'au moins l'une d'une information de stockage de format d'informations de lieu concernant le lieu où le dispositif externe est installé et d'une information de stockage de format d'informations d'opérateur concernant l'opérateur fournissant le dispositif externe, dans le message d'informations ; et
si un séparateur indiquant la présence d'informations de service est détecté dans au moins l'un du format d'informations de lieu et du format d'informations d'opérateur, l'extraction d'informations après le séparateur en tant qu'informations de service et l'affichage des informations de service.

16. Procédé selon la revendication 15, ladite détermination comprenant la détermination de la présence du séparateur dans au moins l'un d'un champ Nom de lieu du format d'informations de lieu et d'un champ Nom d'opérateur du format d'informations d'opérateur.

17. Procédé selon l'une quelconque des revendications 13 à 16, ledit affichage comprenant :
la détermination pour savoir si une information de service de stockage de format d'informations de service supplémentaire est présente dans un champ réservé du message d'informations ; et
si le format d'informations de service supplémentaire est détecté dans le champ réservé, l'extraction des informations de service du format d'informations de service supplémentaire et l'affichage des informations de service.

18. Procédé selon d'une quelconque des revendications 13 à 17, ledit affichage comprenant :
si les informations de service extraites du message d'informations comprennent des données d'image, l'affichage des données d'image sous la forme d'une icône ; et
l'affichage des données d'image correspondant à l'icône si l'icône est sélectionnée.

19. Procédé selon l'une quelconque des revendications 13 à 18, ledit affichage comprenant :
si les informations de service extraites du message d'informations comprennent une adresse de localisateur de ressources universel (URL), l'affichage de l'adresse URL ; et
l'accès à l'adresse URL si l'adresse URL est sélectionnée.

20. Procédé selon l'une quelconque des revendications 13 à 19, ledit affichage comprenant :
si les informations de service extraites du message d'informations comprennent une adresse d'un fichier à télécharger, l'affichage de l'adresse d'un fichier à télécharger ; et
si l'adresse d'un fichier à télécharger est sélectionnée, l'accès à l'adresse d'un fichier à télécharger et le téléchargement du fichier.

21. Procédé selon l'une quelconque des revendications 13 à 20, ledit affichage comprenant :
si les informations de service extraites du message d'informations comprennent une chaîne de caractères, l'affichage de la chaîne de caractères.

22. Procédé selon l'une quelconque des revendications 13 à 19, ledit affichage comprenant :
si les informations de service extraites du message d'informations comprennent un numéro de téléphone, l'affichage du numéro de téléphone ; et
la tentative de composition du numéro de téléphone si le numéro de téléphone est sélectionné.

23. Procédé selon l'une quelconque des revendications 13 à 22, ladite unité de communication à courte portée (170) comprenant une unité de communication Wi-Fi (170), et ledit dispositif externe (200) comprenant un point d'accès (AP) (200).
